Europäisches Patentamt

European Patent Office

Office européen des brevets

(11) Veröffentlichungsnummer: **0 222 376 B1**

# EUROPÄISCHE PATENTSCHRIFT

(45) Veröffentlichungstag der Patentschrift: **10.04.91**

(21) Anmeldenummer: **86115680.0**

(22) Anmeldetag: **12.11.86**

(51) Int. Cl.⁵: **F16K 29/00**, F16K 47/04, F16K 25/04, F16K 31/50

(54) Hochdruckentspannungsventil.

(30) Priorität: **15.11.85 DE 3540478**

(43) Veröffentlichungstag der Anmeldung:
**20.05.87 Patentblatt 87/21**

(45) Bekanntmachung des Hinweises auf die
Patenterteilung:
**10.04.91 Patentblatt 91/15**

(84) Benannte Vertragsstaaten:
**AT BE CH DE FR GB IT LI LU NL SE**

(56) Entgegenhaltungen:
**DE-A- 2 033 834**
**GB-A- 457 447**
**GB-A- 619 361**
**GB-A- 2 121 141**

(73) Patentinhaber: **VEBA OEL Technologie GmbH**
**Alexander-von-Humboldt-Strasse**
**W-4650 Gelsenkirchen 2(DE)**

(72) Erfinder: **Belhustede, Gerhard**
**Chemnitzer Strasse 1**
**W-4352 Herten(DE)**

(74) Vertreter: **Lindner, Wolfgang, Dr.**
**Alexander-von-Humboldt-Strasse Postfach**
**20 10 45**
**W-4650 Gelsenkirchen(DE)**

**Beschreibung**

Die Erfindung betrifft ein Hochdruckentspannungsventil der im Oberbegriff des Patentanspruches I angegebenen Art.

Der Anwendungsbereich des vorliegenden Hochdruckentspannungsventils ist vorzugsweise die Entspannung des auch Feststoffbestandteile in Form von Asche, Katalysator sowie unumgesetzten Kohlebestandteilen enthaltenden Heißabscheiderproduktes der hydrierenden Verflüssigung von Kohle von einem Druckniveau von bis zu 700 bar auf einen niedrigeren Zwischendruck oder auf Normaldruck. Derartige Heißabscheiderrückstände fallen bei Temperaturen zwischen etwa 380 und 480 °C an und bewirken bei der erforderlichen Entspannung von dem Betriebsdruck auf den niedrigeren Druck aufgrund der auftretenden hohen Strömungsgeschwindigkeiten und der in dem Hochdruckentspannungsventil erfolgenden Strömungsumlenkung sowie der abrasiven Eigenschaften der Feststoffbestandteile dieses Heißabscheiderrückstandes einen hohen Verschleiß bzw. eine starke Korrosion der der Einwirkung dieses Rückstandes ausgesetzten Teile des Hochdruckentspannungsventils, insbesondere des Ventilkegels, des Ventilsitzes, der Spindel der sonstigen Gehäuseteile des Entspannungsventiles sowie der Sitzbohrung des Ventilsitzes mit der angeschlossenen Leitung in den Entspannungsbehälter.

Die Einsätze für den Ventilsitz bestehen in der Regel aus verschleißfesten Hartwerkstoffen und können als auswechselbare Teile vorgesehen werden.

Es wurde festgestellt, daß ein exponentiell hoher Verschleiß beim Ausgasen und Ausdampfen des vom Betriebsdruck auf den Entspannungsdruck entspannten Heißabscheiderrückstandes durch hochbeschleunigte Flüssig-, aber auch Feststoffpartikel, in Gegenwart von Wasserstoff, deren Richtung sogar bis zu 180° gegen die Strömungsrichtung verlaufen kann, auftritt.

Ein Entspannungsventil für Slurries unter Druck ist beispielsweise Gegenstand der EP-A- 0 085 251.

Aufgabe der Erfindung ist es, ein Hochdruckentspannungsventil mit verbesserter Standzeit der Verschleißteile zur Verfügung zu stellen.

Gemäß der Erfindung wird diese Aufgabe dadurch gelöst, daß

a) der Hub des Ventilkegels (11) maximal 1 mm beträgt mit Stellschritten von 1 % des Gesamthubes und daß

b) bei der Drehbewegung der Spindelmutter (3) die Ventilspindel (2) und der Ventilkegel (11) durch eine Mitnahmevorrichtung (5) über eine Ratsche (6) in eine einseitig wirkende Drehbewegung versetzt werden.

Das vorliegende Hochdruckentspannungsventil ist als Kurzhubventil ausgebildet, wobei der maximale Durchfluß bereits bei einem Hub von maximal etwa 1 mm gegeben ist.

Zum Einsatz eines derartigen Ventils als Regelarmatur, die beispielsweise den Behälterstand des Heißabscheiders in einem Verfahren zur verflüssigenden Kohlehydrierung als Regelgröße konstant hält, muß dieser maximale Hub von 1 mm in Stellschritten bis herab auf wenige hundertstel Millimeter fein umgesetzt werden können.

Die Erzeugung eines sehr kleinen Hubes des Ventilkegels von maximal 1 mm mit einer Umsetzung in Stellschritten von etwa 1 % des Gesamthubes erfolgt bei dem vorliegenden Hochdruckentspannungsventil mittels eines auf einer Konsole seitlich angebrachten Schwenkspindelantriebes, dessen von der Membran übertragener Hub zunächst beispielsweise mittels eines Kugelgewindegetriebes in eine Drehbewegung umgesetzt und dann in eine Linearbewegung der Spindel des Ventilkegels untersetzt wird.

Die beispielsweise durch eine Membran in bekannter Weise als Stellgröße vorgegebene Hubbewegung wird auf den angegebenen Hub von maximal etwa 1 mm des Ventilkegels umgesetzt, wobei Vorgegebene Hubbewegungen von beispielsweise 40 mm typisch sind.

Eine nähere Ausgestaltung des vorliegenden Hochdruckentspannungsventils beinhaltet eine Nachstellmöglichkeit des Ventilkegels zum Ventilsitz hin, damit dem langsam fortschreitenden Verschleiß Rechnung getragen werden kann. Eine solche Nachstellmöglichkeit in Form einer Ankopplung der Spindel mittels lösbarer Feststellelemente ist beispielsweise mittels Mutter und Kontermutter oder analog wirkender Mittel möglich.

Die Umsetzung des mittels des Stellantriebes, der als pneu-matischer, elektrischer oder hydraulischer Schubantrieb ausgebildet sein kann, erzeugten Hubes mit einem Hubbereich von beispielsweise mindestens etwa 25 mm kann über Rollenlager mittels des Stellantriebes in die geforderte Drehbewegung erfolgen. Die Drehbewegung einer Spindelmutter, die einen spielfrei gearbeiteten innenliegenden Schrauben- bzw. Schneckenteil aufweist, das fest auf der Ventilspindel fixiert ist, wird so in eine definierte Linearbewegung der Ventilspindel untersetzt. Obwohl bei der Ausführung des vorliegenden Hochdruckentspannungsventils als Kurzhubventil lediglich ein Hub von 1 mm zur Verfügung steht, wird ein Stellverhältnis von 1 : 20 erreicht, so daß ein ausreichender Regelbereich zur Verfügung steht.

Zur Minimierung der Wirkungen des Verschleißes durch punktuelle Beanspruchung von Ventilkegel und Ventilsitz ist eine Kopplung der Drehbewegung der Spindelmutter auf eine Verstellratsche vorgesehen. Somit wird bei jeder Ventilstellungs-Änderung, d. h. bei jedem Hub der Ventilspindel diese und damit der Ventilkegel gedreht und der durch Feststoffe auftretende punktuelle Verschleiß auf den gesamten Ventilkegelumfang verteilt.

In weiterer Ausbildung des Hochdruckentspannungsventils ist der Kegelwinkel des Ventilkegels größer als 90° und liegt vorzugsweise bei Werten von 120 bis 170°. Der Ventilkegel und der entsprechend gearbeitete Ventilsitz, abgesehen von der Sitzbohrung, sind demgemäß vorzugsweise stumpfwinklig ausgebildet.

Die stumpfwinklige Ausbildung des Ventilkegels schließt nicht aus, daß der Ventilkegel an seiner Spitze als Spitzkegel mit einem wesentlich kleineren als dem vorbezeichneten Wert des Kegelwinkels ausläuft, wobei aber die vergleichsweise kurz ausgebildete Kegelspitze keinen Kontakt mit dem Ventilsitz oder der Wandung der Sitzbohrung hat und folglich auch nicht zur Abdicht- oder Drosselwirkung des Ventils beiträgt. Hierdurch wird eine Beeinflussung der Strömungsverhältnisse in diesem Bereich bezweckt.

Die Ausbildung der Drosselkontur und des vorliegenden Hochdruckentspannungsventils als Kurzhubventil ermöglicht, daß die Auf- oder Zu-Stellung des Ventils in vergleichsweise kurzen Zeiten erreicht wird, was zu einer erheblichen Verminderung der Verschleißgeschwindigkeit führt, da die Zeiten, in denen das Ventil nur partiell geöffnet ist, exponentiell in die Verschleißgeschwindigkeit eingehen.

Das vorliegende Entspannungsventil zeigt einen vorteilhaften Weg auf, wie die Verschleißgeschwindigkeit dadurch minimiert werden kann, daß durch Minimierung der Hubwege die besonders verschleißintensiven Zwischenstellungen weitgehend vermieden werden.

Eine bevorzugte, nicht einschränkende Ausführungsform des vorliegenden Hochdruckentspannungsventils ist in der Figur dargestellt, wobei die benutzten Bezugzeichen die folgende Bedeutung haben:

| | |
|---|---|
| 1 | Federpaket |
| 2 | Ventilspindel |
| 3 | Spindelmutter |
| 4 | Stellantrieb |
| 5 | Mitnahmevorrichtung |
| 6 | Ratsche |
| 7 | federbelastete Stopfbuchse |
| 8 | , 8' Kontroll- und Spülstutzen |
| 9 | Ventilgehäuse |
| 10 | Ventilsitz |
| 11 | Ventilkegel |
| 12 | Wälzlager |
| 13 | Bügel |
| 14 | Feststellvorrichtung |
| 15 | Einströmkanal |
| 16 | Abströmkanal |

Das Hochdruckentspannungsventil besteht im wesentlichen aus dem Gehäuse 9, den Bügeln 13, dem Stellantrieb 4 sowie einer Umlenkeinheit bestehend aus der Spindelmutter 3, der Mitnahmevorrichtung 5 und der Ratsche 6. Bei diesem Hochdruckentspannungsventil wird der Abstand zweier planparalleler Flächen in einem Bereich von bis zu 1 mm mit einer sehr empfindlichen Umsetzung im Stellbereich fein geregelt. Die Verstellung ist gegeben über die seitliche Anlenkung des Stellantriebes 4 auf die Spindelmutter 3. Spindelmutter 3 besteht aus einem spielfrei gearbeiteten Kugelgewinde mit einem innenliegenden Schneckenteil, das fest mit der Ventilspindel 2 verbunden ist. Die seitliche Anlenkung über den Stellantrieb 4 wird über Spindelmutter 3 somit in eine Drehbewegung und über das innenliegende Schneckenteil in eine Hubbewegung der mit dem Schneckenteil starr verbundenen Ventilspindel 2 übersetzt. Ventilspindel 2 ist oberhalb von Spindelmutter 3 und des Schneckenteils mit einer Feststellvorrichtung 14, die gleichzeitig als Nachstellvorrichtung dient, versehen. Die Nachstellvorrichtung hat die Funktion, den Verschleiß von Ventilsitz 10 und Ventilkegel 11 über die Nachstellung der Ventilspindel 2 und damit des Ventilkegels 11 auszugleichen. Hierdurch wird dem Prozeßdruck, der auf Ventilspindel 2 und Ventilkegel 11 wirkt, entgegengewirkt und ein dichter Prozeßabschluß durch das Hochdruckentspannungsventil erreicht. Zur Unterstützung von Stellantrieb 4 ist das Federpaket 1 über das Wälzlager 12 auf die Ventilspindel 2 drückend aufgebracht. Das Federpaket 1 ist so weit vorgespannt wie es der in Ventilgehäuse 9 anstehende Prozeßdruck erfordert. Die Mitnahmevorrichtung 5 ist mit Ratsche 6 verbunden. Ratsche 6 ist mit ihrem Innenteil auf der Ventilspindel 2 befestigt und hat die Aufgabe, die Ventilspindel 2 bei der Hubbewegung, d. h. gleichzeitig bei einer Anlenkung des Stellantriebes 4, mit Ratsche 6 die Ventilspindel 2 in Richtung um die Spindelachse zu verdrehen und somit punktuelle Verschleißmarken auf dem Ventilsitz 10 und auf dem Ventilkegel 11 auszugleichen, damit möglichst lange ein gleichmäßiges Verschleißbild vorliegt und ein dichter Prozeßabschluß mit dem Ventil gewährleistet bleibt. Die federbelastete Stopfbuchse 7 mit darunter liegendem Kontroll- und Spülstutzen 8, 8' ist so ausgebildet, daß zwei unabhängig voneinander abdichtende Stopfbuchsteile in dem zugehörigen Teil des Ventilgehäuses 9 untergebracht sind, die über die Federvorspannung stets die gleiche Abdichtkraft auf die Dichtelemente aufbringen. Dies ist insbesondere wichtig wegen der auftretenden unterschiedlichen Prozeßdrücke aber auch wegen der Wärmeausdehnung in diesem Teil des Ventilgehäuses 9. Das innere Abdichtelement ist die Stopfbuchse 7 selbst. Als Dichtwerkstoffe kommen hochdruck- und temperaturbständige Medien, wie Reingraphit, Graphitasbest und Graphitseidenpak-

kungen in Betracht. Der Kontrollstutzen 8 ist so angeordnet, daß zwischen den beiden Stopfbuchselementen geprüft werden kann, inwieweit die unterste Stopfbuchse noch Dichteigenschaften besitzt, wobei der unterste Stutzen als Spülstutzen 8' ausgebildet ist und die Spindelführung im Ventilgehäuse 9 mit geringen Mengen Spülöl stets freigehalten wird, wodurch gewährleistet werden soll, daß in den Stopfbuchsenbereich kein Produkt mit Feststoffanteil hereingezogen wird, was die Standzeit der Stopfbuchse wesentlich verringern würde. Das Ventilgehäuse 9 bildet u. a. den Ventilsitz 10, der beispielsweise als eingeschobene Patrone mit innen eingesetzten Hartwerkstoffteilen ausgebildet ist. Ebenso ist der Ventilkegel 11, der auf der Ventilspindel 2 verschraubt ist, beispielsweise mit Hartwerkstoffteilen gepanzert. Z. B. ist in diesem Kegelteil als auswechselbarer Einsatz ein Hartwerkstoffteil als Flachkegel eingebracht. Die beiden Teile Ventilsitz 10 und Ventilkegel 11 sind so gestaltet, daß sie die tangentiale trichterförmige Einströmung durch den Einströmkanal 5 in den Gehäuseraum unterstützen und durch eine im wesentlichen rundum gleichmäßige Wirbelströmung um die Abströmöffnung von Abströmkanal 6 zu einer Vergleichmäßigung des Verschleißes an den beiden Drosselteilen Ventilsitz 10 und Ventilkegel 11 beitragen.

## Ansprüche

1. Hochdruckentspannungsventil mit Gehäuse (9), Gehäuseoberteil und aufgesetztem Federpaket (1), Ventilsitz (10) mit Sitzbohrung, Ventilkegel (11), Spindel (2), Bügel (13), Stellantrieb (4) wobei in der Offenstellung ein Drosselspalt zwischen Ventilsitz (10) und Ventilkegel (11) durch den jeweiligen Abstand der formschlüssig aufeinander passend gefertigten Flächen von Ventilsitz (10) und Ventilkegel (11) gegeben ist, und eine Umsetzung des Hubes des Stellantriebes (4) in eine Drehbewegung einer Spindelmutter (3) stattfindet, wobei die Drehbewegung der Spindelmutter über ein innenliegendes Schrauben- oder Schneckenteil in eine definierte Linearbewegung der Ventilspindel (2) untersetzt wird, dadurch gekennzeichnet, daß
   a) der Hub des Ventilkegels (11) maximal 1 mm beträgt mit Stellschritten von 1 % des Gesamthubes und daß
   b) bei der Drehbewegung der Spindelmutter 3 die Ventilspindel (2) und der Ventilkegel (11) durch eine Mitnahmevorrichtung (5) über eine Ratsche (6) in eine einseitig wirkende Drehbewegung versetzt werden.

2. Hochdruckentspannungsventil nach Anspruch 1, dadurch gekennzeichnet, daß eine Nachstellmöglichkeit des Ventilkegels (11) zum Ventilsitz (10) hin in Form einer Ankopplung der Spindel (2) mittels lösbarer Feststellelemente (14) vorgesehen ist.

3. Hochdruckentspannungsventil nach Anspruch 1, dadurch gekennzeichnet, daß der Kegelwinkel des Ventilkegels (11) einen Wert von 120° bis 170° aufweist.

4. Hochdruckentspannungsventil nach Anspruch 3, dadurch gekennzeichnet, daß der Ventilkegel (11) in einer Spitze mit einem kleineren als dem vorbezeichneten Wert des Kegelwinkels ausläuft und daß sich in der Zu-Stellung diese Spitze in der Sitzbohrung befindet ohne daß die Kegelspitze Kontakt mit dem Ventilsitz (10) oder der Wandung der Sitzbohrung hat.

## Claims

1. A high pressure relief valve having: a casing (9); a casing top portion with a spring pile (1) placed thereon; a valve seat (10) having a seat bore; a valve cone (11); a spindle (2); a bowed member (13), and an adjusting drive (4), a throttling gap being produced in the open position between the valve seat (10) and the valve cone (11) by the particular distance between the faces, manufactured to fit on one another positively, of the valve seat (10) and the valve cone (11), the stroke of the adjusting drive (4) being converted into a rotary movement of a spindle nut (3), the rotary movement of the spindle nut being stepped down via an internal screw or worm member into a clearly defined linear movement of the valve spindle (2), characterized in that the stroke of the valve cone (11) is at the most 1 mm, with adjusting steps of 1% of the total stroke, and in the rotary movement of the spindle nut (3) the valve spindle (2) and the valve cone (11) are put by an entraining device (5) via a pawl (6) into a rotary movement operative on one side.

2. A high pressure relief valve according to claim 1, characterized in that the valve cone (11) is enabled to be after-adjusted in the direction of the valve seat (10) by the coupling of the spindle (2) by means of releasable locating elements (14).

3. A high pressure relief valve according to claim 1,

characterized in that the conical angle of the valve cone (11) has a value of 120° to 170°.

4. A high pressure relief valve according to claim 3,
characterized in that the valve cone (11) terminates in an apex having a value of the conical angle smaller than the aforementioned value, and in the engaged position said apex is disposed in the seat bore without the cone apex contacting the valve seat (10) or the wall of the seat bore.

**Revendications**

1. Vanne de réduction de haute pression avec un boîtier (9), une partie supérieure de boîtier et un bloc ressort (1) placé sur elle, un siège de vanne (10) avec un perçage de siège, un cône de soupape (11), une broche (2), un étrier (13), un entraînement de réglage (4), un interstice d'étranglement étant assuré entre le siège de vanne (10) et le cône de soupape (11) par l'intervalle réciproque des surfaces du siège de vanne (10) et du cône de soupape (11) usinées de façon à s'adapter l'une à l'autre par interpénétration par leurs formes, tandis qu'une conversion de la course de l'entraînement de réglage (4) en un mouvement de rotation d'un écrou de broche (3) a lieu, ce mouvement de rotation de l'écrou de broche étant démultiplié par l'intermédiaire d'une partie de vis ou d'hélice placée à l'intérieur en un mouvement linéaire de la broche de vanne (2), vanne de réduction de haute pression caractérisée en ce que:
   a) la course du cône de vanne (11) est au maximum de 1 mm, avec des étapes de réglage de 1% de la course totale,
   b) lors du mouvement de rotation de l'écrou de broche (3), la broche de vanne (2) et le cône de soupape (11) sont mis en rotation dans un seul sens par un dispositif d'entraînement (5) et par l'intermédiaire d'un cliquet (6).

2. Vanne de réduction de haute pression selon la revendication 1, caractérisée en ce qu'il est prévu une possibilité de réajustement du cône de soupape (11) par rapport au siège de vanne (10) sous la forme d'un accouplement de la broche (2) au moyen d'éléments d'arrêt amovibles (14).

3. Vanne de réduction de haute pression selon la revendication 1, caractérisée en ce que l'angle du cône de soupape (11) a une valeur de 120° à 170°.

4. Vanne de réduction de haute pression selon la revendication 3, caractérisée en ce que le cône de soupape (11) se termine en une pointe avec un angle de cône plus petit que la valeur précitée, et que, dans la position de fermeture, cette pointe se trouve dans le perçage du siège sans que cette pointe de cône soit en contact avec le siège de vanne (10) ou la paroi du perçage de siège.